# EUROPEAN PATENT SPECIFICATION

(11) **EP 3 795 816 B1**
(45) Date of publication and mention of the grant of the patent: **28.08.2024**
(21) Application number: 19804548.6
(22) Date of filing: 17.04.2019
(51) Int. Cl.: F02D 45/00, F02D 41/22, F02D 41/14, F02D 31/00

(54) **ENGINE CONTROL DEVICE AND ENGINE CONTROL METHOD**
MOTORSTEUERUNGSVORRICHTUNG UND MOTORSTEUERUNGSVERFAHREN
DISPOSITIF DE COMMANDE DE MOTEUR ET PROCÉDÉ DE COMMANDE DE MOTEUR

(30) Priority: 18.05.2018 JP 2018095819
(43) Date of publication of application: 24.03.2021
(73) Proprietor: Bosch Corporation, Tokyo 150-8360 (JP)
(72) Inventor: ISHIKAWA, Naruaki, Yokohama-shi, Kanagawa 224-8501 (JP)
(86) International application number: PCT/JP2019/016391
(87) International publication number: WO 2019/220844

(56) References cited:
- EP-A2- 2 581 285
- DE-A1- 19 953 767
- DE-C2- 19 953 767
- JP-A- 2004 108 155
- JP-A- 2008 151 001
- JP-A- 2015 048 805

## Description

### Technical Field

The present invention relates to an engine control system and an engine control method.

### Background Art

In vehicles, an engine control system calculates a target rotational frequency of an engine according to an accelerator pedal position and the like and controls the torque of the engine so that its rotational frequency becomes the target rotational frequency thus calculated. For example, in vehicles equipped with a power take-off (PTO) mechanism, the engine control system calculates the target rotational frequency and performs control to keep the rotational frequency of the engine constant (see PTL 1, for example).

### Citation List

### Patent Literature

PTL 1: JP-A-2010-84735
PTL 2: EP 2 581 285 A2
PTL 3: DE 199 53 767 A1

### Summary of Invention

### Technical Problem

In case of failure in the engine control system, the target rotational frequency calculated by the engine control system becomes an abnormal value, which sometimes happens to increase the output torque of the engine. One measure against such increase of the output torque is a method of limiting, when the target rotational frequency exceeds a maximum rotational frequency set as its upper limit and an actual rotational frequency of the engine exceeds the maximum rotational frequency, the output torque according to a difference between one rotational frequency and the other exceeding the former.

However, in the above method, even if the target rotational frequency becomes an abnormal value, the engine control system does not start limiting the output torque unless the actual rotational frequency exceeds the maximum rotational frequency. The delay time taken since the occurrence of the failure until the start of the limitation on the output torque might not be able to satisfy the target time which is set as the time period in which the failure should be dealt with.

The present invention aims to shorten the time before starting the limitation on the output torque.

### Solution to Problem

The present invention provides an engine control system (100), as defined by independent claim 1. The engine control system includes: a first controller (10) configured to calculate a target rotational frequency (R2) of an engine and control an output torque of the engine according to the target rotational frequency (R2); and a second controller (20) configured to calculate an actual rotational frequency (R3) of the engine and, if the target rotational frequency (R2) calculated by the first controller (10) exceeds a maximum rotational frequency (R1), which is set as an upper limit of the target rotational frequency (R2), and the actual rotational frequency (R3) exceeds the maximum rotational frequency (R1), limit the output torque, which is controlled by the first controller (10), according to a difference between the actual rotational frequency (R3) and the maximum rotational frequency (R1), in which, when the target rotational frequency (R2) exceeds the maximum rotational frequency (R1) a predetermined number of times, the second controller (20) changes the maximum rotational frequency (R1) to the actual rotational frequency (R3) observed before the target rotational frequency (R2) exceeds the maximum rotational frequency (R1), and limits the output torque according to a difference between the actual rotational frequency (R3) and the changed maximum rotational frequency (R1).

### Advantageous Effects of Invention

According to the present invention, it is possible to shorten the time before starting the limitation on the output torque.

### Brief Description of Drawings

Fig. 1 is a block diagram illustrating the configuration of an engine control system according to an embodiment of the present invention.
Fig. 2 is a block diagram illustrating the configuration of a limiting rate calculator.
Fig. 3 is a flowchart illustrating a processing procedure observed when a second controller limits the torque.
Fig. 4 is a graph illustrating an example of a limiting rate on the torque.
Fig. 5 is a graph illustrating an example of an actual torque observed when failure occurs.

### Description of Embodiments

Hereinbelow, an engine control system and an engine control method of the present invention are described with reference to the drawings. Note that, the description provided below is nothing but one embodiment, and the technical scope of the present invention is not limited to the following embodiment.

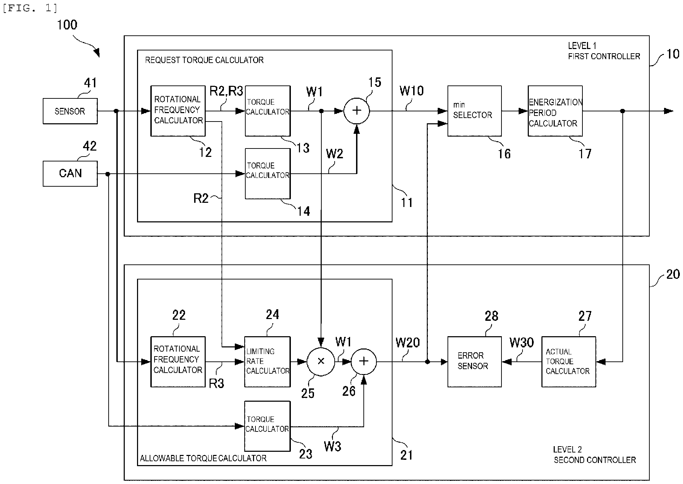

Fig. 1 illustrates the configuration of an engine control system 100 which is one embodiment of the present invention.

The engine control system 100 is mounted to a vehicle, and is connected to various sensors 41 and a CAN 42 (Controller Area Network) provided to each part of the vehicle. The engine control system 100 is configured to perform overall control on the operation of an engine by outputting a control signal to the engine based on signals input from the various sensors 41 and the CAN 42. The engine control system 100 is also referred to as an Electronic Control Unit (ECU).

As illustrated in Fig. 1, the engine control system 100 is divided into areas of Level 1 and Level 2, and the areas include a first controller 10 and a second controller 20, respectively. The areas are each implemented by the same hardware resource such as a microcomputer and a CPU (Central Processing Unit) . In the area of Level 1, the first controller 10 is configured to actually control the engine. In the area of Level 2, the second controller 20 is configured to monitor the control in Level 1. By such monitoring, even if a control error occurs in Level 1, the second controller can detect such error in Level 2 and deal with the error such as limiting the control in Level 1, which enhances the reliability of engine control.

In order to further enhance the reliability, the engine control system 100 may be further provided with an area of Level 3 that includes a third controller, and cause the area of Level 3 to monitor the control in Level 2. Level 3 is implemented by a hardware resource, such as an ASIC (Application Specific Integrated Circuit) different from those of Levels 1 and 2. Thereby, even if failure occurs in the hardware or software in Levels 1 and 2, Level 3 can perform the monitoring operation without being affected by such failure.

### (First Controller)

The first controller 10 is configured to calculate a target rotational frequency R2 of the engine and control the output torque of the engine according to the target rotational frequency R2 thus calculated.

The first controller 10 includes a request torque calculator 11, a min selector 16, and an energization period calculator 17.

The request torque calculator 11 is configured to calculate a request torque W10 for the engine.

The request torque calculator 11 includes a rotational frequency calculator 12, torque calculators 13 and 14, and an adder 15.

The rotational frequency calculator 12 is configured to calculate the target rotational frequency R2 and an actual rotational frequency R3 of the engine in accordance with a predefined arithmetic formula, characteristic curve, and the like based on detection signals input from the various sensors 41 such as an accelerator pedal position sensor and a crank angle sensor.

The torque calculator 13 is configured to calculate a driver request torque W1 in accordance with a predefined arithmetic formula, characteristic curve, and the like based on the target rotational frequency R2 and the actual rotational frequency R3 calculated by the rotational frequency calculator 12.

The torque calculator 14 is configured to calculate an external request torque W2 in accordance with a predefined arithmetic formula, characteristic curve, and the like based on an external request signal input from the CAN 42. For example, the external request signal is a request signal and the like input from a Transmission Control Unit (TCU), a brake system, and the like.

The adder 15 is configured to calculate the request torque W10 for the engine by adding the external request torque W2, calculated by the torque calculator 14, to the driver request torque W1 calculated by the torque calculator 13.

The min selector 16 is configured to compare the request torque W10, calculated by the request torque calculator 11 of the first controller 10, with an allowable torque W20, calculated by the second controller 20, to select and output the smaller torque. By outputting the smaller torque, even if the request torque W10 increases abnormally, it is possible to limit the torque, output from the min selector 16, to a value equal to or smaller than the allowable torque W20.

The energization period calculator 17 is configured to convert the torque W10 or W20, output from the min selector 16, to the amount of fuel to be injected, and calculate an energization period of an injector according to this amount of fuel to be injected. A control signal on the energization period thus calculated is output from the first controller 10 to a drive circuit of the injector. This controls the output torque of the engine to a value according to the target rotational frequency R2.

### (Second Controller)

The second controller 20 is configured to limit, upon detecting an abnormality of the target rotational frequency R2 calculated by the first controller 10, the output torque controlled by the first controller 10.

The second controller 20 includes an allowable torque calculator 21, an actual torque calculator 27, and an error sensor 28.

The allowable torque calculator 21 is configured to calculate the allowable torque W20 of the engine.

The allowable torque calculator 21 includes a rotational frequency calculator 22, a torque calculator 23, a limiting rate calculator 24, a multiplier 25, and an adder 26.

The rotational frequency calculator 22 is configured to calculate the actual rotational frequency R3 as in the first controller 10.

The torque calculator 23 is configured to calculate, as in the first controller 10, an external request torque W3 based on an external request signal input from the CAN 42.

The limiting rate calculator 24 is configured to calculate a limiting rate on the driver request torque W1 calculated by the first controller 10, based on the target rotational frequency R2 calculated by the first controller 10 and the actual rotational frequency R3 calculated by the rotational frequency calculator 22.

The multiplier 25 is configured to compute the limited request torque W1 by multiplying the driver request torque W1, calculated by the first controller 10, by the limiting rate calculated by the limiting rate calculator 24.

The adder 26 is configured to calculate the allowable torque W20 of the engine by adding the request torque W3, calculated by the torque calculator 23, to the request torque W1 output from the multiplier 25.

The actual torque calculator 27 is configured to calculate an actual torque W30 of the engine from the energization period calculated by the energization period calculator 17. In other words, the actual torque W30 is an estimate value of an actual output torque of the engine which is calculated from the energization period.

The error sensor 28 is configured to compare the allowable torque W20, calculated by the allowable torque calculator 21, with the actual torque W30 calculated by the actual torque calculator 27. The error sensor 28 is configured to detect a control error of the first controller 10 if the actual torque W30 exceeds the allowable torque W20. Upon detection of such an error, the engine control system 100 can deal with the error by stopping causing the first controller 10 to control the engine, for example.

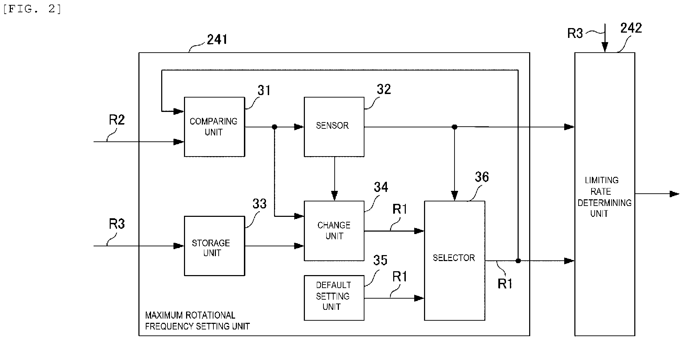

Fig. 2 illustrates a configuration example of the limiting rate calculator 24.

As illustrated in Fig. 2, the limiting rate calculator 24 includes a maximum rotational frequency setting unit 241 and a limiting rate determining unit 242.

The maximum rotational frequency setting unit 241 is configured to set a maximum rotational frequency R1 as an allowable limit for the target rotational frequency R2 calculated by the first controller 10.

As illustrated in Fig. 2, the maximum rotational frequency setting unit 241 includes a comparing unit 31, a sensor 32, a storage unit 33, a change unit 34, a default setting unit 35, and a selector 36.

The comparing unit 31 is configured to compare the target rotational frequency R2, calculated by the first controller 10, with the maximum rotational frequency R1 currently set in the maximum rotational frequency setting unit 241, to judge whether or not the target rotational frequency R2 exceeds the maximum rotational frequency R1.

The sensor 32 is configured to count the number of times when the comparing unit 31 judges that the target rotational frequency R2 has exceeded the maximum rotational frequency R1, and detect an abnormality of the target rotational frequency R2 if the count exceeds a predetermined number of times. The predetermined number of times may be set freely, either once or multiple times. When the predetermined number of times is multiple times, in a case in which the target rotational frequency R2 does not tend to increase continuously such as when the target rotational frequency R2 has exceeded the maximum rotational frequency R1 once but then falls below the maximum rotational frequency R1, such a case may be detected as not abnormal, which can reduce erroneous detection.

The storage unit 33 is configured to store the actual rotational frequency R3 calculated by the rotational frequency calculator 22 of the second controller 20.

The change unit 34 is configured to change the maximum rotational frequency R1 when the sensor 32 detects an abnormality of the target rotational frequency R2. Specifically, when the comparing unit 31 judges that the target rotational frequency R2 does not exceed the maximum rotational frequency R1, the change unit 34 acquires the actual rotational frequency R3 stored in the storage unit 33. The actual rotational frequency R3 thus acquired is the actual rotational frequency R3 in normal times observed before the target rotational frequency R2 exceeds the maximum rotational frequency R1. The change unit 34 may overwrite the actual rotational frequency R3 acquired last time with the acquired actual rotational frequency R3 and store it, or alternatively may store a predetermined number of most recently acquired actual rotational frequencies R3 such as the actual rotational frequencies R3 acquired in the past three times. If the sensor 32 detects the abnormality of the target rotational frequency R2, the change unit 34 outputs the acquired actual rotational frequency R3 in normal times as the changed maximum rotational frequency R1.

The default setting unit 35 is configured to output the default maximum rotational frequency R1. The default maximum rotational frequency R1 is calculated in advance for each of the types of vehicle based on experimental values and the like, and stored in the default setting unit 35.

The selector 36 is configured to select and output the maximum rotational frequency R1 output from the default setting unit 35 if the sensor 32 detects no abnormality of the target rotational frequency R2. On the other hand, the selector 36 is configured to select and output the changed maximum rotational frequency R1 output from the change unit 34 if the sensor 32 detects an abnormality of the target rotational frequency R2. The maximum rotational frequency R1 output from the selector 36 is input to the comparing unit 31 as the maximum rotational frequency R1 currently set.

The maximum rotational frequency setting unit 241 can set the maximum rotational frequency R1 while switching it between the maximum rotational frequency R1 corresponding to an idling mode and the maximum rotational frequency R1 corresponding to a PTO mode. The idling mode is an engine control mode during an idling state. The PTO mode is an engine control mode employed when a Power Take-Off (PTO) mechanism takes off power from the engine. For example, the maximum rotational frequencies R1 for the respective modes can be switched in such a way that the default setting unit 35 outputs the default maximum rotational frequency R1 corresponding to the current mode out of the default maximum rotational frequencies R1 corresponding to the respective modes that are held by this unit. Since the allowable output torque is different between the idling mode and the PTO mode, the limitation on the torque suitable for each of the engine control modes is possible by setting the maximum rotational frequencies R1 corresponding to the respective modes. In addition, in the engine control mode, such as the idling mode or the PTO mode, in which the rotational frequency needs to be kept at a predetermined level, it is particularly effective to limit the output torque that increases abnormally.

The limiting rate determining unit 242 is configured to determine the limiting rate (%) on the torque according to the difference between the actual rotational frequency R3 calculated by the rotational frequency calculator 22 and the maximum rotational frequency R1 set by the maximum rotational frequency setting unit 241 (R3 - R1). The first controller 10 controls the output torque by selecting a smaller one of the request torque W10 and the allowable torque W20. Thus, it is possible to prevent an increase of the output torque along with an abnormal increase of the target rotational frequency R2 by determining the limiting rate that limits the request torque W1 and the allowable torque W20 by a larger degree as the difference (R3 - R1) becomes larger.

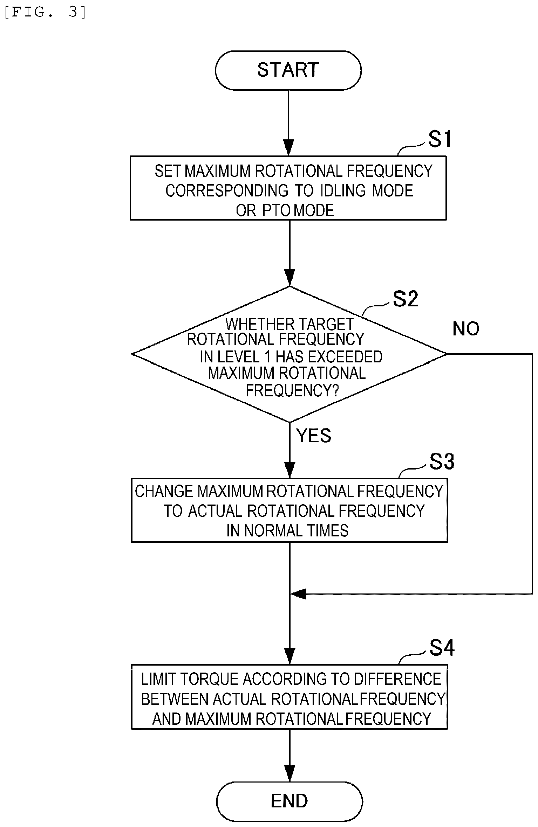

Fig. 3 illustrates a processing procedure observed when the second controller 20 limits the torque. The second controller 20 can execute the processing procedure illustrated in Fig. 3 at predetermined time intervals or at any timing.

As illustrated in Fig. 3, the maximum rotational frequency setting unit 241 sets the maximum rotational frequency R1 corresponding to the idling mode or the PTO mode (Step S1). If the target rotational frequency R2 calculated by the first controller 10 exceeds the currently set maximum rotational frequency R1 a predetermined number of times (Step S2: YES), the maximum rotational frequency setting unit 241 detects an abnormality of the target rotational frequency R2. If detecting the abnormality, the maximum rotational frequency setting unit 241 changes the default maximum rotational frequency R1 to the actual rotational frequency R3 in normal times and outputs the rotational frequency thus changed (Step S3). If detecting no abnormality (Step S2: NO), the maximum rotational frequency setting unit 241 outputs the default maximum rotational frequency R1 without change.

The limiting rate determining unit 242 determines the limiting rate according to the difference between the actual rotational frequency R3 calculated by the rotational frequency calculator 22 and the maximum rotational frequency R1 set by the maximum rotational frequency setting unit 241 (R3 - R1) . The multiplier 25 multiplies the determined limiting rate by the driver request torque W1 calculated by the first controller 10 and outputs the request torque W1 thus limited (Step S4) .

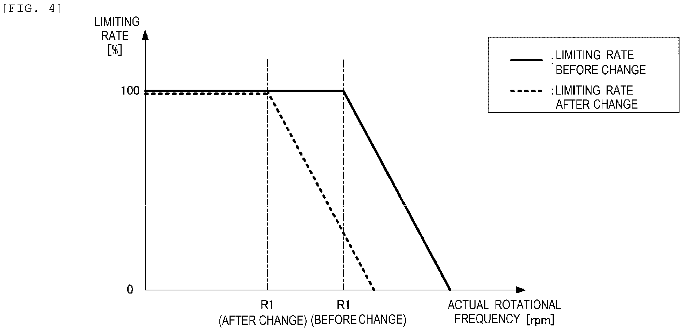

Fig. 4 illustrates an example of the limiting rate at the time of limiting the torque.

As illustrated in Fig. 4, the limiting rate is equal to a maximum value of 100% until the actual rotational frequency R3 exceeds the maximum rotational frequency R1. Once the actual rotational frequency R3 exceeds the maximum rotational frequency R1, the limiting rate becomes smaller as the difference between the actual rotational frequency R3 and the maximum rotational frequency R1 (R3 - R1) becomes larger, and it eventually becomes equal to a minimum value of 0%. In the example illustrated in Fig. 4, the request torque W1 is limited by a larger degree as the limiting rate becomes smaller.

The limiting rate illustrated in Fig. 4 has linear characteristics proportional to the difference (R3 - R1) observed when the actual rotational frequency R3 exceeds the maximum rotational frequency R1; instead, the limiting rate may have curve characteristics in which it changes gently.

The characteristics of the limiting rate is set in such a way that appropriate values for the limiting rate which can promptly limit an abnormal increase of the torque without hampering the usual torque control are calculated in advance for each of the types of vehicle based on experimental values and the like.

As illustrated in Fig. 4, the limitation on the torque starts at the timing when the actual rotational frequency R3 exceeds the maximum rotational frequency R1. While the target rotational frequency R2 increases, the actual rotational frequency R3 is smaller than the target rotational frequency R2; thus, by changing the maximum rotational frequency R1 to the actual rotational frequency R3 observed when the target rotational frequency R2 does not exceed the maximum rotational frequency R1 before change, the changed maximum rotational frequency R1 decreases as illustrated in Fig. 4. Such decrease makes earlier the timing when the actual rotational frequency R3 that increases together with the target rotational frequency R2 exceeds the maximum rotational frequency R1, which shortens the time to start the limitation on the torque as compared to a case in which the maximum rotational frequency R1 is a fixed value.

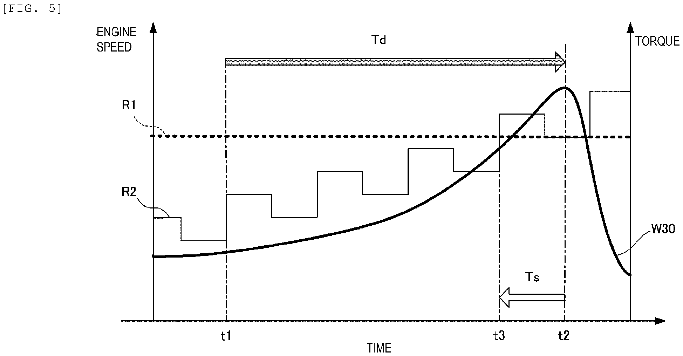

Fig. 5 illustrates an example of an actual torque observed when failure occurs.

As illustrated in Fig. 5, when failure occurs in the first controller 10 at time t1 and the target rotational frequency R2 calculated by the first controller 10 increases, the request torque W10 increases and thus the actual torque W30 also increases. Then, from time t3 when the actual rotational frequency R3 as well as the target rotational frequency R2 exceeds the maximum rotational frequency R1, the second controller 20 starts limiting the torque and the actual torque W30 drops sharply. In this way, since the actual torque W30 starts decreasing due to the start of the limitation on the torque from the time when the actual rotational frequency R3 exceeds the maximum rotational frequency R1, there is delay time Td until the start of the limitation on the torque since the occurrence of the failure.

On the other hand, by changing the maximum rotational frequency R1 to a smaller value at the time t3 when the target rotational frequency R2 exceeds the maximum rotational frequency R1, the actual rotational frequency R3 exceeds the maximum rotational frequency R1 and the limitation on the torque starts as early as the time when the maximum rotational frequency is changed. Thereby, the delay time Td until the start of the limitation on the torque is shortened by time Ts.

As has been described above, once the target rotational frequency R2 calculated by the first controller 10 exceeds the maximum rotational frequency R1 set by the second controller 20, the engine control system 100 of this embodiment limits the output torque of the engine, controlled by the first controller 10, according to the difference between the actual rotational frequency R3 and the maximum rotational frequency R1 calculated by the second controller 20. Thereby, even if the target rotational frequency R2 abnormally increases due to an error of the first controller 10, it is possible to prevent an increase of the output torque due to such abnormal increase.

In addition, the second controller 20 changes the maximum rotational frequency R1, set by the second controller 20, to the actual rotational frequency R3 observed before the target rotational frequency R2 exceeds the maximum rotational frequency R1. Thereby, it is possible to make the maximum rotational frequency R1 smaller and thus accelerate the timing to start the limitation on the torque which starts once the actual rotational frequency R3 exceeds the maximum rotational frequency R1.

Further, the second controller 20 changes the maximum rotational frequency R1 at the time when the target rotational frequency R2 exceeds the maximum rotational frequency R1 a predetermined number of times instead of the time when an error that the actual torque W30 exceeds the allowable torque W20 is detected. Accordingly, it is possible to make the maximum rotational frequency R1 smaller at an earlier timing, and thus accelerate the timing to start the limitation on the torque.

The second controller 20 determines whether to change the maximum rotational frequency R1 based on simple processing of comparing the target rotational frequency R2 with the maximum rotational frequency R1, which makes it possible to reduce the load of monitoring an abnormal value of the target rotational frequency R2.

The preferred embodiments of the present invention have been described above.

For example, the second controller 20 may set the actual rotational frequency R3, set as the changed maximum rotational frequency R1, at the actual rotational frequency R3 immediately before, or prior to immediately before, the time when the target rotational frequency R2 exceeds the maximum rotational frequency R1 as long as the actual rotational frequency R3 is the one observed before the target rotational frequency R2 exceeds the maximum rotational frequency R1. By changing the maximum rotational frequency R1 to a smaller actual rotational frequency R3, it is possible to further accelerate the timing to start the limitation on the torque.

In addition, although the above embodiment has the configuration of limiting the allowable torque W20 by limiting the driver request torque W1 which is a part of the allowable torque W20, the embodiment may have a configuration of limiting the whole allowable torque W20. Further, although the above embodiment has the configuration of limiting the output torque of the engine by limiting the allowable torque W20 and outputting a smaller one of the request torque W10 and the allowable torque W20, the embodiment may have a configuration in which the second controller 20 directly limits the request torque W10 calculated by the first controller 10.

### Reference Signs List

100: Engine control system
10: First controller
11: Request torque calculator
20: Second controller
21: Allowable torque calculator
24: Limiting rate calculator
241: Maximum rotational frequency setting unit
242: Limiting rate determining unit
25: Multiplier

## Claims

1. An engine control system (100) comprising:
a first controller (10) configured to calculate a target rotational frequency (R2) of an engine and control an output torque of the engine according to the target rotational frequency (R2); and
a second controller (20) configured to calculate an actual rotational frequency (R3) of the engine and, if the target rotational frequency (R2) calculated by the first controller (10) exceeds a maximum rotational frequency (R1), which is set as an upper limit of the target rotational frequency (R2), and the actual rotational frequency (R3) exceeds the maximum rotational frequency (R1), limit the output torque, which is controlled by the first controller (10), according to a difference between the actual rotational frequency (R3) and the maximum rotational frequency (R1), wherein
when the target rotational frequency (R2) exceeds the maximum rotational frequency (R1) a predetermined number of times, the second controller (20) changes the maximum rotational frequency (R1) to the actual rotational frequency (R3) observed before the target rotational frequency (R2) exceeds the maximum rotational frequency (R1), and limits the output torque according to a difference between the actual rotational frequency (R3) and the changed maximum rotational frequency (R1).

2. The engine control system (100) according to claim 1, wherein the predetermined number of times is a plurality of times.

3. The engine control system (100) according to claim 1 or 2, wherein, during an idling mode, the second controller (20) sets the maximum rotational frequency (R1) corresponding to the idling mode.

4. The engine control system (100) according to any one of claims 1 to 3, wherein, during a PTO mode, the second controller (20) sets the maximum rotational frequency (R1) corresponding to the PTO mode.

5. The engine control system (100) according to any one of claims 1 to 4, wherein
the second controller (20) calculates an allowable torque of the engine, and limits the allowable torque according to the difference between the actual rotational frequency (R3) and the maximum rotational frequency (R1), and
the first controller (10) calculates a request torque for the engine according to the target rotational frequency (R2), and controls the output torque of the engine using a smaller one of the request torque and the allowable torque.

6. An engine control method comprising the steps of:
causing a first controller (10) to calculate a target rotational frequency (R2) of an engine and control an output torque of the engine according to the target rotational frequency (R2); and
causing a second controller (20) to calculate an actual rotational frequency (R3) of the engine and, if the target rotational frequency (R2) calculated by the first controller (10) exceeds a maximum rotational frequency (R1), which is set as an upper limit of the target rotational frequency (R2), and the actual rotational frequency (R3) exceeds the maximum rotational frequency (R1), limit the output torque, which is controlled by the first controller (10), according to a difference between the actual rotational frequency (R3) and the maximum rotational frequency (R1), wherein
the step of limiting the output torque further comprises the step of changing, when the target rotational frequency (R2) exceeds the maximum rotational frequency (R1) a predetermined number of times, the maximum rotational frequency (R1) to the actual rotational frequency (R3) observed before the target rotational frequency (R2) exceeds the maximum rotational frequency (R1), and limits the output torque according to a difference between the actual rotational frequency (R3) and the changed maximum rotational frequency (R1).

## Patentansprüche

1. Motorsteuersystem (100), das Folgendes umfasst:
eine erste Steuerung (10), die dazu ausgelegt ist, eine Solldrehfrequenz (R2) eines Motors zu berechnen und gemäß der Solldrehfrequenz (R2) ein Ausgangsdrehmoment des Motors zu steuern; und
eine zweite Steuerung (20), die dazu ausgelegt ist, eine Istdrehfrequenz (R3) des Motors zu berechnen und, wenn die Solldrehfrequenz (R2), die von der ersten Steuerung (10) berechnet wird, eine maximale Drehfrequenz (R1), die als ein oberer Grenzwert der Solldrehfrequenz (R2) eingestellt ist, überschreitet und die Istdrehfrequenz (R3) die maximale Drehfrequenz (R1) überschreitet, das Ausgangsdrehmoment, das von der ersten Steuerung (10) gesteuert wird, gemäß einer Differenz zwischen der Istdrehfrequenz (R3) und der maximalen Drehfrequenz (R1) zu begrenzen, wobei
wenn die Solldrehfrequenz (R2) die maximale Drehfrequenz (R1) mit einer vorbestimmten Häufigkeit überschreitet, die zweite Steuerung (20) die maximale Drehfrequenz (R1) in die Istdrehfrequenz (R3) ändert, die beobachtet wird, bevor die Solldrehfrequenz (R2) die maximale Drehfrequenz (R1) überschreitet, und das Ausgangsdrehmoment gemäß einer Differenz zwischen der Istdrehfrequenz (R3) und der geänderten maximalen Drehfrequenz (R1) begrenzt.

2. Motorsteuersystem (100) nach Anspruch 1, wobei die vorbestimmte Häufigkeit eine Vielzahl von Malen ist.

3. Motorsteuersystem (100) nach Anspruch 1 oder 2, wobei die zweite Steuerung (20) während eines Ruhemodus die maximale Drehfrequenz (R1) dem Ruhemodus entsprechend einstellt.

4. Motorsteuersystem (100) nach einem der Ansprüche 1 bis 3, wobei die zweite Steuerung (20) während eines PTO-Modus die maximale Drehfrequenz (R1) dem PTO-Modus entsprechend einstellt.

5. Motorsteuersystem (100) nach einem der Ansprüche 1 bis 4, wobei
die zweite Steuerung (20) ein zulässiges Drehmoment des Motors berechnet und das zulässige Drehmoment gemäß der Differenz zwischen der Istdrehfrequenz (R3) und der maximalen Drehfrequenz (R1) begrenzt und
die erste Steuerung (10) ein Anforderungsdrehmoment für den Motor gemäß der Solldrehfrequenz (R2) berechnet und das Ausgangsdrehmoment des Motors unter Verwendung eines kleineren des Anforderungsdrehmoments und des zulässigen Drehmoments steuert.

6. Motorsteuerverfahren, das die folgenden Schritte umfasst:
Veranlassen einer ersten Steuerung (10) eine Solldrehfrequenz (R2) eines Motors zu berechnen und gemäß der Solldrehfrequenz (R2) ein Ausgangsdrehmoment des Motors zu steuern; und
Veranlassen einer zweiten Steuerung (20) eine Istdrehfrequenz (R3) des Motors zu berechnen und, wenn die Solldrehfrequenz (R2), die von der ersten Steuerung (10) berechnet wird, eine maximale Drehfrequenz (R1), die als ein oberer Grenzwert der Solldrehfrequenz (R2) eingestellt ist, überschreitet und die Istdrehfrequenz (R3) die maximale Drehfrequenz (R1) überschreitet, das Ausgangsdrehmoment, das von der ersten Steuerung (10) gesteuert wird, gemäß einer Differenz zwischen der Istdrehfrequenz (R3) und der maximalen Drehfrequenz (R1) zu begrenzen, wobei
der Schritt des Begrenzens des Ausgangsdrehmoments ferner den Schritt des Änderns der maximalen Drehfrequenz (R1) in die Istdrehfrequenz (R3) umfasst, die beobachtet wird, bevor die Solldrehfrequenz (R2) die maximale Drehfrequenz (R1) überschreitet, wenn die Solldrehfrequenz (R2) die maximale Drehfrequenz (R1) mit einer vorbestimmten Häufigkeit überschreitet, und des Begrenzens des Ausgangsdrehmoments gemäß einer Differenz zwischen der Istdrehfrequenz (R3) und der geänderten maximalen Drehfrequenz (R1).

## Revendications

1. Système de commande de moteur (100) comprenant :
un premier dispositif de commande (10) configuré pour calculer une fréquence de rotation cible (R2) d'un moteur et commander un couple de sortie du moteur en fonction de la fréquence de rotation cible (R2) ; et
un deuxième dispositif de commande (20) configuré pour calculer une fréquence de rotation réelle (R3) du moteur et, si la fréquence de rotation cible (R2) calculée par le premier dispositif de commande (10) dépasse une fréquence de rotation maximale (R1), qui est définie comme limite supérieure de la fréquence de rotation cible (R2), et que la fréquence de rotation réelle (R3) dépasse la fréquence de rotation maximale (R1), limiter le couple de sortie, qui est commandé par le premier dispositif de commande (10), en fonction d'une différence entre la fréquence de rotation réelle (R3) et la fréquence de rotation maximale (R1), dans lequel
lorsque la fréquence de rotation cible (R2) dépasse la fréquence de rotation maximale (R1) un nombre prédéterminé de fois, le deuxième dispositif de commande (20) change la fréquence de rotation maximale (R1) en la fréquence de rotation réelle (R3) observée avant que la fréquence de rotation cible (R2) ne dépasse la fréquence de rotation maximale (R1), et limite le couple de sortie en fonction d'une différence entre la fréquence de rotation réelle (R3) et la fréquence de rotation maximale changée (R1) .

2. Système de commande de moteur (100) selon la revendication 1, dans lequel le nombre prédéterminé de fois est une pluralité de fois.

3. Système de commande de moteur (100) selon la revendication 1 ou la revendication 2, dans lequel, pendant un mode ralenti, le deuxième dispositif de commande (20) règle la fréquence de rotation maximale (R1) correspondant au mode ralenti.

4. Système de commande de moteur (100) selon l'une quelconque des revendications 1 à 3, dans lequel, pendant un mode PTO, le deuxième dispositif de commande (20) règle la fréquence de rotation maximale (R1) correspondant au mode PTO.

5. Dispositif de commande (100) selon l'une quelconque des revendications 1 à 4, dans lequel
le deuxième dispositif de commande (20) calcule un couple admissible du moteur, et limite le couple admissible en fonction de la différence entre la fréquence de rotation réelle (R3) et la fréquence de rotation maximale (R1), et
le premier dispositif de commande (10) calcule un couple de demande pour le moteur en fonction de la fréquence de rotation cible (R2), et commande le couple de sortie du moteur à l'aide d'un couple plus petit parmi le couple de demande et le couple admissible.

6. Procédé de commande de moteur comprenant les étapes consistant à :
amener un premier dispositif de commande (10) à calculer une fréquence de rotation cible (R2) d'un moteur et commander un couple de sortie du moteur en fonction de la fréquence de rotation cible (R2) ; et
amener un deuxième dispositif de commande (20) à calculer une fréquence de rotation réelle (R3) du moteur et, si la fréquence de rotation cible (R2) calculée par le premier dispositif de commande (10) dépasse une fréquence de rotation maximale (R1), qui est définie comme limite supérieure de la fréquence de rotation cible (R2), et que la fréquence de rotation réelle (R3) dépasse la fréquence de rotation maximale (R1), à limiter le couple de sortie, qui est commandé par le premier dispositif de commande (10), en fonction d'une différence entre la fréquence de rotation réelle (R3) et la fréquence de rotation maximale (R1), dans lequel
l'étape consistant à limiter le couple de sortie comprend en outre l'étape consistant à changer, lorsque la fréquence de rotation cible (R2) dépasse la fréquence de rotation maximale (R1) un nombre de fois prédéterminé, la fréquence de rotation maximale (R1) en la fréquence de rotation réelle (R3) observée avant que la fréquence de rotation cible (R2) ne dépasse la fréquence de rotation maximale (R1), et à limiter le couple de sortie en fonction d'une différence entre la fréquence de rotation réelle (R3) et la fréquence de rotation maximale changée (R1) .
